# EUROPÄISCHE PATENTSCHRIFT

(11) **EP 0 738 850 B1**
(45) Veröffentlichungstag und Bekanntmachung des Hinweises auf die Patenterteilung: **15.04.1998**
(21) Anmeldenummer: 96102735.6
(22) Anmeldetag: 23.02.1996
(51) Int. Cl.: F16L 17/04

(54) **Rohrkupplung**
Pipe coupling
Raccord pour tuyaux

(30) Priorität: 22.04.1995 DE 19514940
(43) Veröffentlichungstag der Anmeldung: 23.10.1996
(73) Patentinhaber: DIAG DESIGN AG, CH-6300 Zug (CH)
(72) Erfinder:
(74) Vertreter: Schmitt, Hans, Dipl.-Ing.

(56) Entgegenhaltungen:
- EP-A- 0 447 955
- DE-C- 4 204 762
- FR-A- 2 334 905

## Beschreibung

Die Erfindung betrifft eine Rohrkupplung mit einer ringförmigen Sicherungsschelle, die zum Verbinden gegenüberliegender Rohrenden mittels einer Spanneinrichtung in Umfangsrichtung zusammenziehbar ist, wobei die Sicherungsschelle an ihrem inneren Schellenumfang beidseits mehrere voneinander beabstandete und radial nach innen weisende Haltekrallen aufweist.

Aus der DE-PS 42 04 762 ist bereits eine Rohrkupplung der eingangs erwähnten Art bekannt, die eine Sicherungsschelle zum Verbinden der gegenüberliegenden unprofilierten Endabschnitte zweier Rohre aufweist. Mit Hilfe dieser vorbekannten Rohrkupplung kann eine kraftschlüssige Verbindung zwischen den einander benachbarten Endabschnitten bei solchen Gußrohren erzielt werden, die - wie beispielsweise innenliegende Regenfalleitungen oder Druckleitungen von Hebeanlagen - einem hohen Innendruck ausgesetzt sind.

Die Sicherungsschelle der Rohrkupplung gemäß DE-PS 42 04 762 hat ein in Umfangsrichtung unterteiltes und radial nach innen offenes Gehäuse, in welchem Laschen befestigt sind, die jeweils eine der Spalte zwischen den Gehäuseteilen überbrücken. Die Gehäuseteile der Sicherungsstelle können mittels einer Spannvorrichtung zusammengezogen werden, wobei die Spannvorrichtung zwei Befestigungsschrauben aufweist, die an den gegenüberliegenden Befestigungslaschen der Gehäuseteile angreifen. In dem Gehäuse ist eine Dichtungsmanschette eingelegt, die zur Abdichtung der miteinander zu verbindenden Rohrenden vorgesehen ist. Um eine Relativbewegung, eine Axialverschiebung und eine Auslenkung dieser Rohrenden gegen hohe Kräfte weitgehend zu verhindern, weisen die axial äußeren Seitenwände des Schellengehäuses sowie die Seitenwände der Laschen an ihrem radial inneren Rand spitzzahnige Haltekrallen auf, die im zusammengekuppelten Zustand bei gespannter Rohrkupplung in das Rohrmaterial eingreifen.

Die Herstellung dieser vorbekannten Rohrkupplung ist durch ihre mehrteilige Ausgestaltung mit einem nicht unerheblichen Aufwand verbunden. Da die Sicherungsschelle aus miteinander zu verbindenden Gehäuseteilen besteht und da die Gehäuseöffnung dieser unelastischen Gehäuseteile an den Rohrdurchmesser anzupassen ist, ist der Einsatzbereich dieser vorbekannten Rohrkupplung jeweils auf den vorgesehenen Rohrdurchmesser beschränkt.

Es besteht daher die Aufgabe, eine Rohrkupplung der eingangs erwähnten Art zu schaffen, die hohen Belastungen standhält, vielseitig einsetzbar ist und dennoch mit möglichst geringem Aufwand hergestellt werden kann.

Die erfindungsgemäße Lösung dieser Aufgabe besteht bei der Rohrkupplung der eingangs erwähnten Art insbesondere darin, daß die Sicherungsschelle als Schellenband ausgebildet ist und beidseits an ihren Umfangsrandbereichen einen axial nach innen umgeformten Falz aufweist, daß die Haltekrallen jeweils aus einer laschenförmigen Stanzung am axialen inneren Falzrandbereich gebildet sind und daß diese laschenförmigen Stanzungen jeweils zumindest zwei Laschenteile aufweisen, von denen ein erstes Laschenteil einstückig am axialen inneren Falzrandbereich angeformt ist und von denen wenigstens ein zweites Laschenteil mit dem ersten Laschenteil verbunden sowie axial nach außen orientiert ist.

Die erfindungsgemäße Rohrkupplung weist eine Sicherungsschelle auf, die als Schellenband ausgebildet ist. Die als Schellenband ausgebildete Sicherungsschelle ist in Umfangsrichtung vergleichsweise elastisch und biegeweich, so daß sie gut auch an unrunde Rohre und/oder infolge von Fertigungstoleranzen unterschiedliche Rohrdurchmesser angelegt werden kann. Durch die Biegeweichheit der Sicherungsschelle können die Haltekrallen fest mit den miteinander zu verbindenden Rohrenden in Kontakt gebracht werden. Dabei sind die Haltekrallen im Bereich eines Falzes des Schellenbandes vorgesehen, die beidseits an dessen Umfangsrandbereich axial nach innen umgeformt ist. Während das Schellenband in den randseitigen, die Haltekrallen aufweisenden Teilbereichen doppelwandig ausgebildet ist und somit gut die im Bereich der Haltekrallen einwirkenden Spannkräfte beziehungsweise die Rekationskräfte vom Rohr auf die Haltekrallen aufnehmen kann, ist die bandförmige Sicherungsschelle in den Bereichen, in denen keine großen Kräfte aufgenommen werden müssen, einlagig ausgebildet, was mit einer nicht unerheblichen Materialersparnis verbunden ist.

Da die Haltekrallen zumindest ein nach außen orientiertes Laschenteil haben, bewirken axiale Kräfte oder Längsbewegungen, die in entgegengesetzte Richtungen nach außen wirken, daß sich die Haltekrallen jeweils mit ihrem nach außen orientierten Laschenteil auf dem Falz abstützen und dadurch fester in die Rohrenden eingreifen können. Durch solche axialen Kräfte werden auch die Haltekrallen in axialer Richtung geringfügig nach außen verschwenkt, bis die Haltekrallen mit der Basis ihres etwa axial nach außen orientierten Laschenteiles auf dem Falz anliegen. Dabei graben sich die Haltekrallen jeweils mit dem freien Randbereich ihres ersten Laschenteiles zusätzlich in den benachbarten Rohrabschnitt ein, weil die vergleichsweise lange Diagonale des zweiten Laschenteiles zunehmend in eine in Relation zum Rohrverbinder radiale Position verschwenkt wird. Dieser beim Verschwenken der Haltekrallen infolge axialer Kräfte bewirkte Eingriff wird hier auch als "Kippeffekt" bezeichnet. Dabei ist es besonders vorteilhaft, daß die von der Basis der zweiten Laschenteile auf den Rohrverbinder ausgeübten Kräfte gerade in dem verstärkten Falzbereich eingeleitet werden.

Da die Sicherungsschelle durch die Elastizität und Biegeweichheit leicht aufgebogen und um ein Rohr gelegt werden kann, ist die erfindungsgemäße Rohrkupplung auch als zugfeste Reparaturschelle zu verwenden. Der am Schellenumfang beidseits etwa radial nach innen umgeformte Falz begünstigt nicht nur die Ästhetik der erfindungsgemäßen Rohrkupplung, sondern vermindert gleichzeitig auch das Verletzungsrisiko an den Schellenrändern. Da die Haltekrallen jeweils aus einer laschenförmigen Stanzung am inneren Falzrandbereich gebildet sind, kann die Sicherungsschelle der erfindungsgemäßen Rohrkupplung in wenigen Arbeitsgängen kostengünstig hergestellt werden.

Die Vielseitigkeit der erfindungsgemäßen Rohrkupplung sowie dessen leichte Anpaßbarkeit auch an unterschiedliche Rohrdurchmesser (Toleranzausgleich) wird dadurch begünstigt, daß die Spanneinrichtung Spannbolzen oder dergleichen Widerlager hat, die zum Zusammenziehen der Schellenenden über zumindest eine Spannschraube oder dergleichen Verstellelement miteinander verbunden sind, daß die freien Schellenenden zur Aufnahme der Spannbolzen schlaufenförmig ausgebildet sind und daß die Sicherungsschelle im Bereich ihrer schlaufenförmigen Schellenenden jeweils wenigstens eine Durchgriffsöffnung aufweisen, welche die Spannschraube(n) durchsetzt (durchsetzen).

Um die Spannkraft gerade im verstärkten Bereich der Sicherungsschelle einleiten zu können, ist es vorteilhaft, wenn die freien Schellenenden der Sicherungsschelle jeweils beidseits im Bereich der Falze als schlaufenförmige Haltelaschen ausgebildet sind und wenn diese Haltelaschen wenigstens eines Schellenendes eine Durchgriffsöffnung zwischen sich begrenzen.

Eine besonders vorteilhafte Ausführungsform gemäß der Erfindung sieht vor, daß an einem freien Schellenende eine in Umfangsrichtung der Sicherungsschelle orientierte Führungslasche vorgesehen ist, die zwischen den Haltekrallen am gegenüberliegenden Schellenende geführt ist und daß sich die Führungslasche zu ihrem freien Laschenende hin vorzugsweise verjüngt. Die zwischen den beidseits der Sicherungsschelle angeordneten Haltekrallen verschieblich geführte Führungslasche übernimmt beim Festziehen der Spannschraube die Führung der Schellenbandenden zueinander. Gleichzeitig wird mittels der Führungslasche auch der zwischen den Schellenenden im Bereich der Spanneinrichtung verbleibende Spalt überdeckt, wodurch eine in der Sicherungsschelle befindliche Dichtungsmanschette in Umfangsrichtung gleichmäßig und dicht auf die Rohrenden gedrückt wird. Eine Weiterbildung gemäß der Erfindung, die den geringen Aufwand bei der Herstellung der erfindungsgemäßen Rohrkupplung noch zusätzlich begünstigt, sieht vor, daß die Haltelaschen durch in Umfangsrichtung orientierte Einschnitte oder Einstanzungen der freien Schellenenden begrenzt sind und daß der zwischen den Einschnitten oder Einstanzungen eines Schellenendes verbleibenden Materialsteg als Führungslasche ausgebildet ist.

Um die Rohre an ihren einander zugewandten Endabschnitten gut abdichten zu können, ist es vorteilhaft, wenn zwischen den in axialer Richtung voneinander beabstandeten und beidseits am Schellenumfang vorgesehenen Haltekrallen eine Dichtungsmanschette vorgesehen oder gehalten ist. Diese Dichtungsmanschette, die mit ihren in Umfangsrichtung orientierten Längsrändern vorzugsweise an den einander zugewandten Innenseiten der ersten Laschenteile der Haltekrallen anliegt, wird zwischen diesen Haltekrallen in axialer Richtung gesichert.

Damit sich die Haltekrallen beim Festziehen der Sicherungsschelle gut in die Endabschnitte der Gußrohre eingraben können, ist es möglich, daß sich die freien Enden zumindest des ersten Laschenteiles der Haltekrallen verjüngen. Dabei können diese freien Enden der Laschenteile kreisbogenförmig ausgebildet sein. Eine weitere Ausführungsform sieht vor, daß zumindest am freien und etwa radial nach innen weisenden Laschenende des ersten Laschenteiles wenigstens einer Haltekralle eine Ansatzspitze oder eine mehrzackige Ansatzkrone vorgesehen ist. Bevorzugt wird jedoch eine Ausführungsform, bei der der freie Randbereich des ersten Laschenteiles etwa quer und vorzugsweise rechtwinklig zur Längserstreckung dieses Laschenteiles angeordnet ist.

Beim Festziehen der Spanneinrichtung legen die in Umfangsrichtung jeweils ersten Haltekrallen an den Schellenenden den längsten Weg zurück, wodurch sie am meisten auf Querkraft beansprucht werden. Gemäß einer bevorzugten Ausführungsform gemäß der Erfindung ist daher vorgesehen, daß die in Umfangsrichtung jeweils erste Haltekralle an den Schellenenden lediglich ein zweites Laschenteil hat, welches auf der dem Schellenende abgewandten Seite des ersten Laschenteiles mit diesem verbunden ist. Um ein übermäßiges Verbiegen dieser in Umfangsrichtung ersten Haltekrallen zu vermeiden und um die gute Verstellbarkeit der erfindungsgemäßen Rohrkupplung zu begünstigen, ist es vorteilhaft, wenn das erste Laschenteil dieser Haltekrallen an den dem Schellenende zugewandten Eckbereich des freien Laschenendes abgeschrägt ist. Eine solche Anschrägung des ersten Laschenteiles erleichtert es den in Umfangsrichtung jeweils ersten Haltekrallen, beim Festziehen der Sicherungsschelle auf dem Guß- oder Metallrohr zu gleiten.

Um die Stabilität der Haltekrallen bei axialen Zug- oder radialen Spannkräften zu erhöhen und um den oben beschriebenen Kippeffekt der Haltekrallen bei axialen Zugkräften zu begünstigen, ist es vorteilhaft, wenn das erste Laschenteil der übrigen Haltekrallen beidseits jeweils mit einem weiteren, nach außen orientierten zweiten Laschenteil verbunden ist und wenn die Haltekrallen mit ihren ersten und zweiten Laschenteilen einen U- oder C-förmigen Querschnitt haben.

Durch die Herstellungsart der bandförmigen Sicherungsschelle ist es möglich, nur die freien Endbereiche der Haltekrallen zu härten, während das Schellenband im übrigen ungehärtet und elastisch bleibt. Dabei können die Längsränder des Schellenbandes, welche für die laschenförmigen Haltekrallen vorgesehen sind, im Durchlaufverfahren, vorzugsweise im ausgestanzten, aber noch unverformten Zustand des für die Sicherungsschelle vorgesehenen Materialstreifens, randseitig mit einer Flamme angeblasen und wieder abgekühlt werden.

Eine bevorzugte Ausführungsform gemäß der Erfindung sieht vor, daß die Sicherungsschelle aus einem einstückigen Materialstreifen besteht und daß die Sicherungsschelle vorzugsweise als Blechbiegeteil ausgebildet ist.

Weitere Vorteile der Erfindung ergeben sich aus der folgenden Beschreibung erfindungsgemäßer Ausführungsbeispiele in Verbindung mit den Ansprüchen sowie der Zeichnung. Die einzelnen Merkmale können je für sich oder zu mehreren bei einer Ausführungsform gemäß der Erfindung verwirklicht sein.

Es zeigt:
- **Fig. 1**: eine Rohrkupplung mit einer ringförmigen Sicherungsschelle in einer perspektivischen Darstellung, wobei die Sicherungsschelle in Umfangsrichtung mittels einer Spanneinrichtung zusammenziehbar ist, welche eine Spannschraube als Verstellelement hat,
- **Fig. 2 bis 5**: die zur Herstellung der Sicherungsschelle aus Figur 1 erforderlichen Arbeitsschritte, wobei aus den Figuren 2 bis 5 deutlich wird, daß die Sicherungsschelle aus einem einstückigen Materialzuschnitt hergestellt wird,
- **Fig. 6 bis 10**: die am Schellenumfang einer Sicherungsschelle gemäß Figur 1 angeordneten Haltekrallen in unterschiedlichen Ausführungen und
- **Fig. 11**: eine Rohrkupplung, ähnlich der aus Figur 1, ebenfalls in einer perspektivischen Darstellung, wobei die Spanneinrichtung der Rohrkupplung in Figur 11 zwei Spannschrauben als Verstellelemente aufweist.

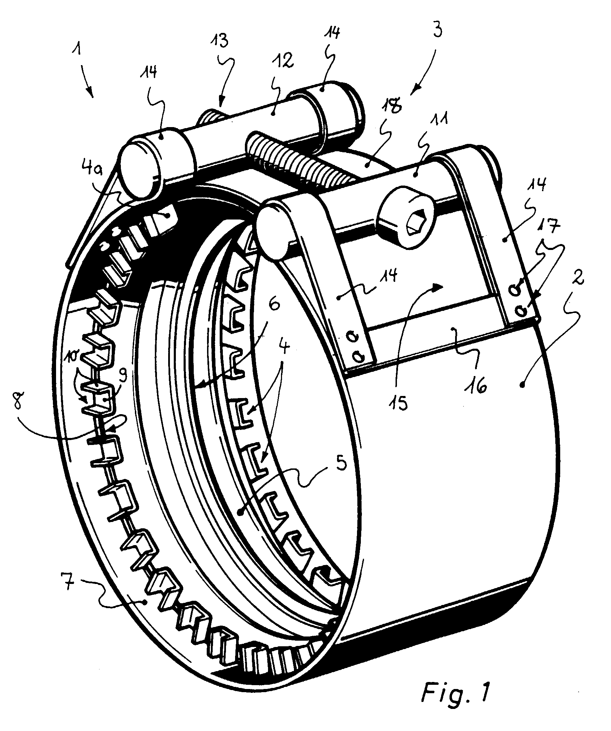

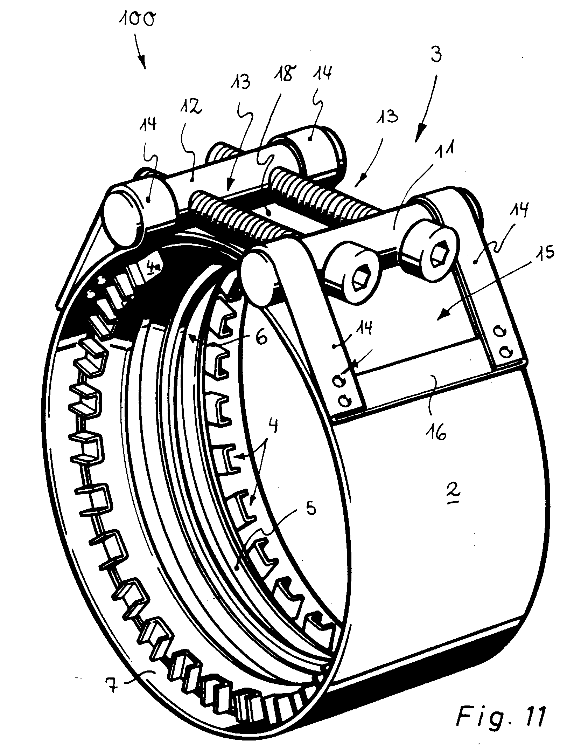

In den Figuren 1 und 11 ist jeweils eine Rohrkupplung 1, 100 dargestellt, die eine ringförmige Sicherungsschelle 2 aufweist, welche hier auch als "Schellenband 2" bezeichnet wird. Die bandförmige Sicherungsschelle 2 ist zum Verbinden gegenüberliegender Rohrenden mittels einer Spanneinrichtung 3 zusammenziehbar, wobei die Sicherungsschelle 2 an ihrem inneren Schellenumfang beidseits mehrere voneinander beabstandete und radial nach innen weisende Haltekrallen 4 aufweist. Die Haltekrallen 4 greifen nach dem Festziehen und Spannen der Sicherungsschelle 2 fest in den Außenumfang der Rohrenden ein, die mit ihren benachbarten stirnseitigen Rohröffnungen zwischen den in axialem Abstand zueinander angeordneten Haltekrallen 4 angeordnet sind.

Zwischen den in axialer Richtung voneinander beabstandeten und beidseits am Schellenumfang vorgesehenen Haltekrallen 4 ist eine Dichtungsmanschette 5 vorgesehen, die an den einander zugewandten Längsseiten der Haltekrallen 4 anliegt und dadurch in axialer Richtung gesichert ist. In die Dichtungsmanschette 5 ist ein radial nach innen vorstehender Distanzring 6 eingearbeitet, der als Positionierungshilfe dient und den Anwender des erfindungsgemäßen Rohrverbinders auf einfache Weise signalisiert, daß die am Distanzring anliegenden und einander benachbarten Rohrenden etwa gleichmäßig und somit ausreichend sicher in der Rohrkupplung gehalten sind.

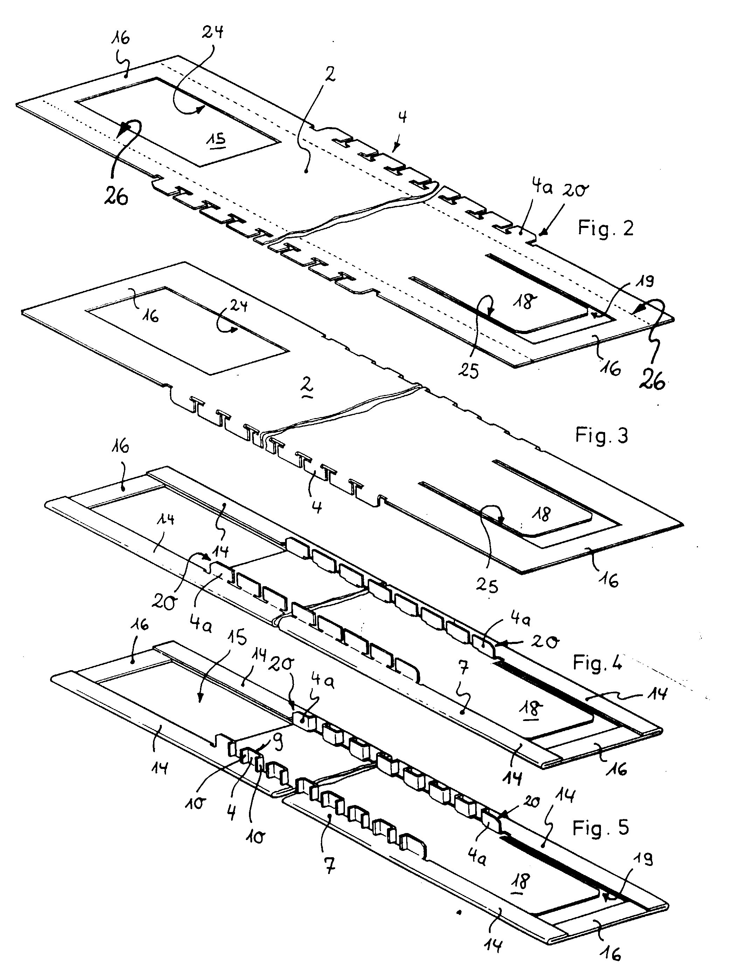

Wie aus den Figuren 1, 5 und 11 deutlich wird, weist die bandförmige Sicherungsschelle 2 beidseits an ihren Umfangsrandbereichen einen nach innen umgeformten Falz 7 oder eine Dopplung auf. In den Figuren 2 bis 4 ist dargestellt, daß dabei die Haltekrallen 4 jeweils aus einer laschenförmigen Stanzung am inneren Falz 7 gebildet sind. Die laschenförmigen Stanzungen weisen Laschenteile 9, 10 auf, von denen ein erstes Laschenteil 9 einstückig am inneren Falzrandbereich 8 angeformt ist und von denen zumindest ein zweites Laschenteil 10 mit dem ersten Laschenteil 9 über eine radial orientierte Falzlinie einstückig verbunden und in axialer Richtung nach außen orientiert ist.

Bei einer axialen Zugbelastung der Haltekrallen 4 in entgegengesetzte Richtungen nach außen stützen sich die zweiten Laschenteile 10 an ihrer Basis auf dem Falz 7 oder der Dopplung ab. Durch solche axialen Kräfte werden die Haltekrallen 4 in axialer Richtung geringfügig nach außen verschwenkt, bis die Haltekrallen 4 mit der Basis ihres etwa axial nach außen orientierten Laschenteiles 10 auf dem Falz 7 oder der Dopplung anliegen. Dabei graben sich die Haltekrallen 4 jeweils mit dem freien Randbereich ihres ersten Laschenteiles 9 in den benachbarten Rohrabschnitt ein, weil die vergleichsweise lange Diagonale des zweiten Laschenteiles 10 zunehmend in eine in Relation zum Rohrverbinder radiale Position verschwenkt wird. Dabei werden die von der Basis der zweiten Laschenteile 10 auf die Sicherungsschelle 2 ausgeübten Kräfte gerade in dem besonders stabilen Falz- oder Dopplungsbereich 7 eingeleitet. Die beim Festziehen der Sicherungsschelle 2 ausgeübte Spannkraft wird zudem gezielt dort in die Sicherungsschelle 2 eingeleitet, wo sich die Ebene der Haltekrallen 4 befindet. In diesem Bereich, wo große Kräfte aufzunehmen sind, ist die Sicherungsschelle 2 doppelwandig ausgebildet. In dem zwischen den Falzen 7 angeordneten Schellenabschnitt, wo nur geringe Kräfte einwirken, ist das Schellenband 2 demgegenüber bloß einlagig, wodurch sich eine Materialersparnis und vor allem eine hohe Elastiziät und Biegeweichheit der Sicherungsschelle 2 ergibt.

Wegen der Biegeweichheit der Sicherungsschelle 2 kann sich diese auch an unrunde Rohre gut anpassen. Die Sicherungsschelle 2 kann leicht aufgebogen und um ein Rohr gelegt werden, weshalb sie auch als zugfeste Reparaturschelle einsetzbar ist. Die elastische Sicherungsschelle 2 ist leicht an unterschiedliche Rohrdurchmesser anzupassen, wobei die miteinander zu verbindenden Rohrenden beispielsweise aufgrund hoher Fertigungstoleranzen unterschiedliche Rohrdurchmesser aufweisen können. Dabei begünstigt die Biegeweichheit des Rohrverbinders 1, 100, daß stets alle Haltekrallen 4 seiner Sicherungsschelle 2 am Rohrumfang angreifen.

Die Spanneinrichtung 3 der Sicherungsschelle 2 hat zwei Spannbolzen 11, 12 oder dergleichen Widerlager, die zum Zusammenziehen der Sicherungsschelle 2 über zumindest eine Spannschraube 13 oder dergleichen Verstellelement miteinander verbunden sind. Während die Sicherungsschelle 2 der Rohrkupplung 1 gemäß Figur 1 nur eine Spannschraube 13 hat, weist die Sicherungsschelle 2 der Rohrkupplung 100 in Figur 11 zwei solcher, voneinander beabstandeter Spannschrauben 13 auf. Die Spannschrauben 13 liegen mit ihrem Schraubenkopf auf dem Spannbolzen 11 auf, während sie mit dem Außengewinde ihres Schraubenschaftes in ein Innengewinde am gegenüberliegenden Spannbolzen 12 eingeschraubt sind.

Wie aus den Figuren 1 und 11 deutlich wird, sind die freien Schellenenden zur Aufnahme der Spannbolzen 11, 12 schlaufenförmig ausgebildet. Dabei sind die freien Schellenenden der Sicherungsschelle 2 jeweils beidseits im Bereich der Falze 7 als schlaufenförmige Haltelaschen 14 ausgebildet. Die beiden Haltelaschen 14 jedes Schellenendes begrenzen eine Durchgriffsöffnung 15 zwischen sich, welche die Spannschrauben 13 durchsetzen. Die beiden, jeweils einander zugeordneten Haltelaschen 14 sind am freien und nach außen gebogenen Schellenende über einen Steg 16 des Schellenbandes 2 miteinander verbunden und an der Sicherungsschelle 2 befestigt. Zur Befestigung der Haltelaschen 14 könnten diese zwar auch an ihren Laschenenden beispielsweise verschweißt sein. Vorzugsweise sind diese Laschenenden - wie hier dargestellt - durch Nieten 17 befestigt, wodurch die Korrosionsfestigkeit der Sicherungsschelle 2 begünstigt wird und auch kostengünstigere Materialien verwendet werden können. Da auch die im Bereich des Falzes 7 angeordneten Haltelaschen 14 doppelwandig ausgebildet sind, kann die in diesem Bereich einwirkende Spannkraft gut aufgenommen und in das Schellenband 2 eingeleitet werden.

Die Figuren 1 bis 5 sowie Figur 11 zeigen, daß an einem der beiden freien Schellenenden eine in Umfangsrichtung der Sicherungsschelle 2 orientierte Führungslasche 18 vorgesehen ist, die mit ihrem freien Laschenende zwischen den Haltekrallen 4 am gegenüberliegenden Schellenende geführt ist. Um ein Verhaken der Führungslasche 18 zu verhindern, verjüngt sich diese zu ihrem freien Laschenende hin. Sie weist dazu in den Eckbereichen ihres freien Laschenendes entsprechende Anschrägungen 19 auf. Die Führungslasche 18 kann an das Schellenband 2 angeschweißt sein. Besonders vorteilhaft ist es jedoch, wenn sie - wie hier - als Fortsetzung des Schellenbandes einstückig mit diesem verbunden ist. Die Führungslasche 18 überdeckt den Spalt zwischen den Schellenenden, so daß der gesamte Außenumfang der Dichtungsmanschette 5 von der Sicherungsschelle 2 überdeckt und gleichmäßig am Außenumfang der Rohre angedrückt wird.

In den Figuren 1, 5 und 11 ist dargestellt, daß die in Umfangsrichtung jeweils erste Haltekralle 4a an den Schellenenden nur ein zweites Laschenteil 10 hat, welches auf der dem Schellenende abgewandten Seite des ersten Laschenteiles 9 mit diesem verbunden ist. Auf der dem Schellenende zugewandten Seite weist das erste Laschenteil 9 an seinem freien Eckbereich eine Anschrägung 20 oder dergleichen Verjüngung auf, die es der ersten Haltekralle 4a erleichtert, beim Festziehen der Sicherungsschelle 2 auf dem Rohr zu gleiten.

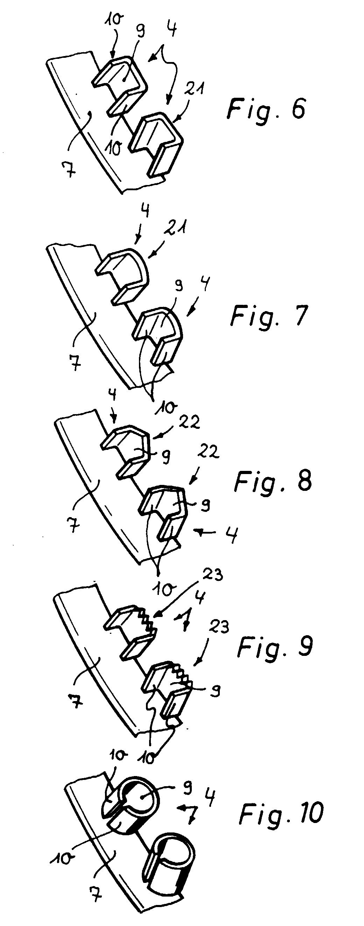

Mit Ausnahme der jeweils ersten Haltekrallen 4a sind die übrigen Haltekrallen 4 an ihrem ersten Laschenteil 9 beidseits mit einem weiteren, nach außen orientierten zweiten Laschenteil 10 verbunden und weisen dadurch eine U- oder - wie auch in Figur 10 gezeigt - einen C-förmigen Querschnitt auf.

Durch ihren U- oder C-förmigen Querschnitt können sich die Haltekrallen 4 an ihrer Basis gut auf dem Falz 7 abstützen. Dabei schneiden sich die Haltekrallen 4 beim Festziehen der Sicherungsschelle 2 sowie bei einer axialen Zugbelastung infolge des oben beschriebenen Kippeffektes noch tiefer in den Rohrumfang ein, wodurch sich eine besonders stabile, zugfeste Verbindung im Bereich der Sicherungsschelle 2 ergibt.

Um ein besonders gutes und tiefes Eingreifen der Haltekrallen 4 zu ermöglichen, weisen diese vorzugsweise an ihrem ersten Laschenteil 9 ein sich nach außen hin verjüngendes Laschenende auf. Während die Haltekrallen in den Figuren 1, 6 und 11 einen etwa rechtwinklig zur Krallen-Längsachse orientierten, geraden Laschenrand 21 haben, ist der Laschenrand des jeweils ersten Laschenteiles 9 der Haltekrallen 4 in Figur 7 kreisbogenförmig ausgebildet. Die Haltekrallen 4 gemäß Figur 8 weisen demgegenüber eine Ansatzspitze 22 und die Haltekrallen 4 gemäß Figur 9 eine mehrzackige Ansatzkrone 23 auf.

In den Figuren 2 bis 5 sind einzelne der zur Herstellung der Sicherungsschelle 2 erforderlichen Arbeitsschritte dargestellt. Wie aus den Figuren 2 bis 5 deutlich wird, ist die Sicherungsschelle 2 aus einem einzigen Materialzuschnitt hergestellt und vorzugsweise als Blechbiegeteil ausgebildet. Der streifenförmige Materialzuschnitt gemäß Figur 2 weist in einem mittleren Abschnitt seiner streifenförmigen Längserstreckung die zunächst nach außen gerichteten Stanzungen für die Haltekrallen 4 auf. Die Haltekrallen 4 sind durch T-förmige Stanzungen voneinander getrennt, wobei diese T-förmigen Stanzungen auf den gegenüberliegenden Längsseiten des Materialzuschnittes mit ihrem T-Quersteg einander zugewandt sind. Während an dem einen Streifenende des Materialzuschnittes in Figur 2 eine rechteckige Ausstanzung 24 die an diesem Schellenende vorgesehenen Durchgriffsöffnung 15 bildet, wird an dem gegenüberliegenden Schellenende die Führungslasche 18 durch eine U-förmige Einstanzung 25 begrenzt. Aus Figur 2 wird deutlich, daß durch die Herstellungsart des Schellenblechs 2 gezielt nur die Enden der Haltekrallen 4 gehärtet werden können, während der Materialstreifen im übrigen ungehärtet und elastisch bleibt, indem der ausgestanzte, aber noch ungebogene Materialstreifen an seinem Längsrand im Bereich der laschenförmigen und für die Haltekrallen 4 vorgesehenen Stanzungen mit einer Flamme angeblasen und wieder abgekühlt wird.

In einem nachfolgenden, in Figur 3 dargestellten Arbeitsschritt werden die den Haltekrallen 4 zugeordneten laschenförmigen Stanzungen etwa rechtwinklig umgebogen, um anschließend beidseits des Materialstreifens den Falz 7 gemäß Figur 4 zu biegen. Um das Umbiegen des Materialstreifens erleichtern und um den Falz oder die Dopplung mit möglichst geringem Aufwand herstellen zu können, ist es vorteilhaft, wenn der Materialstreifen im Bereich der erforderlichen Umbiegung eine Materialschwächung aufweist, die entsprechend der Umbiegungslinie in Längsrichtung des Materialstreifens orientiert ist. Wie in Figur 2 angedeutet ist, kann diese Materialschwächung beidseits jeweils als Perforation 26 des Materialstreifens ausgebildet sein. Eine solche Perforation 26 schafft kleine Durchtrittsöffnungen, durch die beispielsweise eine im Herstellungsprozeß eventuell erforderliche Flüssigkeit, etwa ein Lösungs- oder Entfettungsmittel, auch nach dem Umbiegen und Herstellen der Dopplung 7 aus dem dazwischen eingeschlossenen taschenförmigen Zwischenraum in vorteilhafter Weise abfließen kann.

Nach dem Umbiegen und Herstellen des Falzes 7 werden gemäß dem in Figur 5 dargestellten Arbeitsschritt dann die zweiten Laschenteile 10 nach außen umgebogen und die Haltekrallen 4 fertiggestellt. Nach dem Umbiegen der Haltelaschen 14 und dem Annieten oder dergleichen Verbinden ihrer Laschenenden am Schellenband 2 wird die Sicherungsschelle 2 in eine Kreisform gebracht und mittels der Spanneinrichtung 3 bis zur Montage des Rohrverbinders 1 in dieser Kreisform erhalten.

Aus den Figuren 2 bis 5 wird deutlich, daß die Sicherungsschelle 2 aus einem einzigen Materialzuschnitt mit geringem Materialaufwand kostengünstig in Biegefalttechnik hergestellt werden kann.

Mit Hilfe der Rohrkupplung 1, 100 können glattzylindrische Rohre und Rohre mit unprofilierten Endabschnitten sowie glattendige Rohre dicht miteinander verbunden werden. Die Sicherungsschelle 2 der Rohrkupplungen 1, 100 erlaubt eine zugfeste Verbindung, welche die axialen Kräfte aufnehmen kann, die insbesondere durch einen hohen Rohrinnendruck, eine Temperaturschwankung oder infolge von Schwenkbewegungen bei der Montage entstehen können. Dabei lassen die Rohrkupplungen 1, 100 kleinere Auslenkungen der Rohre zu, ohne daß die Rohrverbinder ihre Funktionstüchtigkeit verlieren. Auch solche Rohrverbindungen, die beispielsweise in Folge von Fabrikationstoleranzen einen unterschiedlichen Rohrdurchmesser haben, können in den Rohrkupplungen 1, 100 fest und sicher eingespannt werden. Durch die Biegeweichheit der Sicherungsschelle 2 greifen dabei alle Haltekrallen 4 an den Rohrumfängen an. Die Rohrkupplungen 1, 100 können auch hohen Drücken widerstehen, so daß eine zugfeste Verbindung entsteht, die auch in entgegengesetzte Richtungen wirkende axiale Kräfte aufnehmen kann. Die Sicherungsschelle 2 der Rohrkupplungen 1, 100 kann sich durch ihre Biegeweichheit auch an unrunde Rohre gut anpassen. Die Sicherungsschelle 2 ist zwar aus einem einstückigen Materialzuschnitt mit geringem Materialaufwand kostengünstig herstellbar, - in den Bereichen aber, in denen hohe Kräfte aufzunehmen sind, ist das Schellenband durch die beidseitigen Falze 7 doppelwandig ausgebildet, so daß die auf die Sicherungsschelle 2 im Bereich der Haltekrallen 4 sowie der Haltelaschen 14 einwirkenden Kräfte gut aufgenommen und in das Schellenband 2 eingeleitet werden können. Die an den beiden Umfangsrandbereichen der Sicherungsschelle 2 vorgesehenen Falze 7 bilden weiche, runde Kanten an den axialen Enden dieser Rohrverbinder 1, 100, wodurch das Verletzungsrisiko verringert und die besondere Ästhetik dieser Rohrkupplungen begünstigt wird.

Da die für verschiedene Rohrdurchmesser-Bereiche unterschiedlich langen Schellenbänder 2 an ihren Schellenenden gleich ausgestaltet werden, dieselbe Blechbreite aufweisen und zu ihrer Herstellung dieselben Arbeitsschritte erforderlich sind, läßt sich auch ein Rohrkupplungs-Sortiment leicht herstellen, in dem - wie in den Figuren 2 bis 5 angedeutet ist - lediglich der mittlere Abschnitt des Materialstreifens und die dort vorgesehene Anzahl der Haltekrallen 4 verändert wird.

Sofern die Rohrkupplungen 1, 100 auch Rohre mit unterschiedlichen Durchmessern verbinden sollen, kann es vorteilhaft sein, wenn die Angriffstellen der Spannschrauben 13 an den Spannbolzen 11, 12 drehbar oder beweglich gelagert sind, beispielsweise in dem diese Angriffstellen als im Querschnitt kreisbogenförmige oder halbrunde Lagerteile ausgebildet sind, die jeweils in einer formangepaßten Lagerpfanne der Spannbolzen 11, 12 liegen.

## Patentansprüche

1. Rohrkupplung (1, 100) mit einer ringförmigen Sicherungsschelle (2), die zum Verbinden gegenüberliegender Rohrenden mittels einer Spanneinrichtung (3) in Umfangsrichtung zusammenziehbar ist, wobei die Sicherungsschelle (2) an ihrem inneren Schellenumfang beidseits mehrere voneinander beabstandete und radial nach innen weisende Haltekrallen (4) aufweist, **dadurch gekennzeichnet,** daß die Sicherungsschelle (2) als Schellenband ausgebildet und beidseits an ihren Umfangsrandbereichen einen axial nach innen umgeformten Falz (7) aufweist, daß die Haltekrallen (4) jeweils aus einer laschenförmigen Stanzung am axialen inneren Falzrandbereich (8) gebildet sind und daß diese laschenförmigen Stanzungen jeweils zumindest zwei Laschenteile (9, 10) aufweisen, von denen ein erstes Laschenteil (9) einstückig am axialen inneren Falzrandbereich (8) angeformt und von denen wenigstens ein zweites Laschenteil (10) mit dem ersten Laschenteil (9) verbunden sowie axial nach außen orientiert ist.

2. Rohrkupplung nach Anspruch 1, dadurch gekennzeichnet, daß die Spanneinrichtung (3) Spannbolzen (11, 12) oder dergleichen Widerlager hat, die zum Zusammenziehen der Sicherungsschelle (2) über zumindest eine Spannschraube (13) oder dergleichen Verstellelement miteinander verbunden sind, daß die freien Schellenenden zur Aufnahme der Spannbolzen (11, 12) schlaufenförmig ausgebildet sind und daß die Sicherungsschelle (2) im Bereich ihrer schlaufenförmigen Schellenenden jeweils wenigstens eine Durchgriffsöffnung (15) aufweist, welche die Spannschraube(n) (13) durchsetzt bzw. durchsetzen.

3. Rohrkupplung nach Anspruch 1 oder 2, dadurch gekennzeichnet, daß die freien Schellenenden der Sicherungsschelle (2) jeweils beidseits im Bereich der Falze (7) als schlaufenförmige Haltelaschen (14) ausgebildet sind und daß diese Haltelaschen (14) wenigstens eines Schellenendes eine Durchgriffsöffnung (15) zwischen sich begrenzen.

4. Rohrkupplung nach einem der Ansprüche 1 bis 3, dadurch gekennzeichnet, daß an einem freien Schellenende eine in Umfangsrichtung der Sicherungsschelle (2) orientierte Führungslasche (18) vorgesehen ist, die zwischen den Haltekrallen (4) am gegenüberliegenden Schellenende geführt ist und daß sich die Führungslasche (18) zu ihrem freien Laschenende hin vorzugsweise verjüngt.

5. Rohrkupplung nach einem der Ansprüche 3 oder 4, dadurch gekennzeichnet, daß die Haltelaschen (14) durch in Umfangsrichtung orientierte Einschnitte oder Einstanzungen (24, 25) der freien Schellenenden begrenzt sind und daß der zwischen den Einschnitten oder Einstanzungen (25) eines Schellenendes verbleibende Materialsteg als Führungslasche (18) ausgebildet ist.

6. Rohrkupplung nach einem der Ansprüche 1 bis 5, dadurch gekennzeichnet, daß zwischen den in axialer Richtung voneinander beabstandeten und beidseits am Schellenumfang vorgesehenen Haltekrallen (4) eine Dichtungsmanschette (5) vorgesehen oder gehalten ist.

7. Rohrkupplung nach einem der Ansprüche 1 bis 6, dadurch gekennzeichnet, daß zumindest am freien und nach innen weisenden Laschenende des ersten Laschenteiles (9) wenigstens einer Haltekralle (4) eine Ansatzspitze (22) oder eine Ansatzkrone (23) vorgesehen ist.

8. Rohrkupplung nach einem der Ansprüche 1 bis 7, dadurch gekennzeichnet, daß die in Umfangsrichtung jeweils erste Haltekralle (4a) an den Schellenenden lediglich ein zweites Laschenteil (10) hat, welches auf der dem Schellenende abgewandten Seite des ersten Laschenteiles (9) mit diesem (9) verbunden ist.

9. Rohrkupplung nach einem der Ansprüche 1 bis 8, dadurch gekennzeichnet, daß das erste Laschenteil (9) zumindest einer Haltekralle (4) beidseits jeweils mit einem weiteren, nach außen orientierten zweiten Laschenteil (10) verbunden ist und daß die Haltekrallen (4) mit ihren ersten und zweiten Laschenteilen (9, 10) einen U- oder C-förmigen Querschnitt haben.

10. Rohrkupplung nach einem der Ansprüche 1 bis 9, dadurch gekennzeichnet, daß die Sicherungsschelle (2) im Bereich ihrer Haltekrallen (4) gehärtet ist.

11. Rohrkupplung nach einem der Ansprüche 1 bis 10, dadurch gekennzeichnet, daß die Sicherungsschelle (2) aus einem einstückigen Materialzuschnitt hergestellt und vorzugsweise als Blechbiegeteil ausgebildet ist.

12. Rohrkupplung nach einem der Ansprüche 1 bis 10, dadurch gekennzeichnet, daß der freie Randbereich des ersten Laschenteiles (9) der Haltekrallen (4) etwa quer und vorzugsweise rechtwinklig zur Längserstreckung dieser Haltekrallen (4) angeordnet ist.

## Claims

1. A pipe coupling (1, 100) having an annular securing clamp (2), which for connecting opposed pipe ends is contractible in the circumferential direction by means of a tensioning device (3), whereby the securing clamp (2) has on its inner circumference at either side a plurality of mutually spaced retaining claws (4) pointing radially inwardly, **characterized** in that the securing clamp (2) takes the form of a band clamp fitting and has on either side at its circumferential edge areas a seam (7) formed axially inwardly, that each retaining claw (4) is formed from a lug-like pressing at the axial, inner, seam edge area (8) and that said lug-like pressings have in each case at least two lug portions (9, 10), a first lug portion (9) thereof being formed integrally with the axial, inner, seam edge area (8) and at least one second lug portion (10) thereof being connected to the first lug portion (9) and oriented axially outwardly.

2. A pipe coupling as claimed in claim 1, characterized in that the tensioning device (3) has tension bolts (11, 12) or similar abutments which are interconnected by way of at least one tightening screw (13) or similar adjusting element for contracting the securing clamp (2), that the free clamp ends are of loop-shaped configuration for receiving the tension bolts (11, 12) and that the securing clamp (2) has in the region of its loop-shaped ends in each case at least one opening (15) therethrough traversed by the tightening screw(s) (13).

3. A pipe coupling as claimed in claim 1 or claim 2, characterized in that in the region of the seam (7), on either side, the free ends of the securing clamp (2) take the form of loop-shaped holding straps (14) and that said holding straps (14) of at least one clamp end define an opening (15) therebetween.

4. A pipe coupling as claimed in any one of claims 1 to 3, characterized in that provided at one free clamp end is a guide plate (18) which is oriented in the circumferential direction of the securing clamp (2) and is guided between the retaining claws (4) at the opposite clamp end, and that the guide plate (18) preferably tapers toward its free end.

5. A pipe coupling as claimed in either of claims 3 or 4, characterized in that the holding straps (14) are defined by cut or stamped portions (24, 25) which are formed in the free clamp ends and are oriented in the circumferential direction, and that the web of material remaining between the cut or stamped portions (25) of one clamp end takes the form of the guide plate (18).

6. A pipe coupling as claimed in any one of claims 1 to 5, characterized in that a gasket (5) is provided or held between the axially mutually spaced retaining claws provided on either side at the circumference of the clamp.

7. A pipe coupling as claimed in any one of claims 1 to 6, characterized in that a contact tip (22) or a contact crown (23) is provided at least at the free and inwardly directed end of the first lug portion (9) of at least one retaining claw (4).

8. A pipe coupling as claimed in any one of claims 1 to 7, characterized in that the first retaining claw (4a) at either clamp end in the circumferential direction has only one second lug portion (10) which is connected to the first lug portion (9) at the side thereof facing away from the clamp end.

9. A pipe coupling as claimed in any one of claims 1 to 8, characterized in that the first lug portion (9) of at least one retaining claw (4) is connected on both sides to in each case one further, outwardly oriented, second lug portion (10), and that the retaining claws (4) with their first and second lug portions (9, 10) have a U-shaped or C-shaped cross section.

10. A pipe coupling as claimed in any one of claims 1 to 9, characterized in that the securing clamp (2) is hardened in the region of its retaining claws (4).

11. A pipe coupling as claimed in any one of claims I to 10, characterized in that the securing clamp (10) is produced from a one-piece blank and preferably takes the form of a plate bending element.

12. A pipe coupling as claimed in any one of claims 1 to 10, characterized in that the free edge area of the first lug portion (9) of the retaining claws (4) is arranged approximately transversely of, and preferably at right angles to, the longitudinal expanse of said retaining claws (4).

## Revendications

1. Raccord pour tuyaux (1, 100) avec un collier de sûreté (2) annulaire qui peut être resserré dans le sens circonférentiel au moyen d'un dispositif de serrage (3) pour le raccordement d'extrémités de tuyaux opposées, le collier de sûreté (2) présentant des deux côtés sur sa circonférence intérieure plusieurs crans de retenue (4) écartés les uns des autres et dirigés radialement vers l'intérieur, **caractérisé en ce que** le collier de sûreté (2) est formé comme bande de collier et présente des deux côtés, sur les parties du bord de sa circonférence, un pli (7) formé axialement vers l'intérieur, en ce que les crans de retenue (4) sont respectivement formés d'une découpe en forme de languette sur la partie axiale et intérieure du bord du pli (8), et en ce que ces découpes en forme de languette présentent respectivement au moins deux parties de languette (9, 10), dont une première partie de languette (9) est formée d'une seule pièce sur la partie axiale et intérieure du bord du pli (8) et dont au moins une seconde partie de languette (10) est raccordée à la première partie de languette (9) et est orientée axialement vers l'extérieur.

2. Raccord pour tuyaux selon la revendication 1, **caractérisé en ce que** le dispositif de serrage (3) possède des tourillons de tension (11, 12) ou des butées du même type raccordés entre eux par au moins une vis de serrage (13) ou un élément de réglage similaire pour resserrer le collier de sûreté (2), en ce que les extrémités libres du collier sont formées en forme de boucle pour recevoir les tourillons de tension (11, 12) et en ce que le collier de sûreté (2), dans la partie de ses extrémités en forme de boucle, présente respectivement au moins une ouverture de pénétration (15) qui est traversée par la (les) vis de serrage (13).

3. Raccord pour tuyaux selon la revendication 1 ou 2, **caractérisé en ce que** les extrémités libres du collier de sûreté (2) sont formées respectivement des deux côtés dans la partie des plis (7) comme des pattes de maintien (14) en forme de boucle et en ce que ces pattes de maintien (14) d'au moins une extrémité de collier délimitent entres elles une ouverture de pénétration (15).

4. Raccord pour tuyaux selon l'une des revendications 1 à 3, **caractérisé en ce que** sur l'une des extrémités libres du collier est prévue une éclisse de guidage (18) orientée dans le sens circonférentiel du collier de sûreté (2), cette éclisse de guidage étant menée entre les crans de retenue (4) sur l'extrémité opposée du collier. et en ce que l'éclisse de guidage (18) s'amincit de préférence vers son extrémité libre.

5. Raccord pour tuyaux selon l'une des revendications 3 ou 4, **caractérisé en ce que** les pattes de maintien (14) sont limitées par des entailles ou découpes (24, 25) des extrémités libres du collier, orientées dans le sens circonférentiel, et en ce que la nervure de matériau restant entre les entailles ou découpes (25) d'une extrémité du collier est formée comme éclisse de guidage (18).

6. Raccord pour tuyaux selon l'une des revendications 1 à 5, **caractérisé en ce qu'**entre les crans de retenue (4) écartés les uns des autres en sens axial et prévus des deux côtés sur la circonférence du collier, est prévue ou fixée une manchette de garniture (5).

7. Raccord pour tuyaux selon l'une des revendications 1 à 6, **caractérisé en ce que,** au moins sur l'extrémité libre et orientée vers l'intérieur de la de la languette de la première partie de languette (9) d'au moins un cran de retenue (4) est prévue une pointe en saillie (22) ou une crête en saillie (23).

8. Raccord pour tuyaux selon l'une des revendications 1 à 7, **caractérisé en ce que** respectivement le premier cran de retenue (4a) en sens circonférentiel sur les extrémités du collier a seulement une seconde partie de languette (10) raccordée à la première partie de languette (9) sur le côté de celle-ci qui est opposé à l'extrémité du collier.

9. Raccord pour tuyaux selon l'une des revendications 1 à 8, **caractérisé en ce que** la première partie de languette (9) d'au moins un cran de retenue (4) est raccordée respectivement des deux côtés à une autre seconde partie de languette (10) orientée vers l'extérieur et en ce que les crans de retenue (4) avec leurs première et seconde parties de languette (9, 10) ont une section en forme de U ou de C.

10. Raccord pour tuyaux selon l'une des revendications 1 à 9, **caractérisé en ce que** le collier de sûreté (2) est durci dans la partie de ses crans de retenue (4).

11. Raccord pour tuyaux selon l'une des revendications 1 à 10, **caractérisé en ce que** le collier de sûreté (2) est fabriqué par découpe d'une pièce dans un matériau et est formé de préférence comme pièce en tôle flexible.

12. Raccord pour tuyaux selon l'une des revendications 1 à 10, **caractérisé en ce que** la partie libre du bord de la première partie de languette (9) des crans de retenue (4) est disposée à peu près en travers et de préférence à angle droit par rapport à l'étendue longitudinale de ces crans de retenue (4).
